# EUROPÄISCHE PATENTSCHRIFT

(11) **EP 2 302 337 B1**
(45) Veröffentlichungstag und Bekanntmachung des Hinweises auf die Patenterteilung: **23.03.2016**
(21) Anmeldenummer: 10008681.8
(22) Anmeldetag: 19.08.2010
(51) Int. Cl.: G01F 11/02, B01L 3/02

(54) **Dosiervorrichtung mit einer Dosierpipette**
Dosing device with a dosing pipette
Dispositif de dosage doté d'une pipette de dosage

(30) Priorität: 28.09.2009 DE 102009043234; 09.10.2009 DE 102009048847
(43) Veröffentlichungstag der Anmeldung: 30.03.2011
(73) Patentinhaber: elm-plastic GmbH, 54647 Dudeldorf (DE)
(72) Erfinder: Lonien, Birgit, 54647 Dudeldorf (DE); Möhs, Sascha, 54647 Dudeldorf (DE)
(74) Vertreter: Zinnecker, Armin

(56) Entgegenhaltungen:
- DE-T2- 69 406 647
- DE-U1- 7 934 993
- US-A- 2 705 494
- US-A- 3 831 602
- US-A- 4 744 955
- US-A- 5 115 816

## Beschreibung

Die Erfindung betrifft eine Dosiervorrichtung mit einer Dosierpipette und einem Dosieraufsatz. Die Dosierpipette umfasst einen Dosierkörper und einen Kolben, der in dem Dosierkörper längsverschieblich geführt ist.

Derartige Dosierpipetten sind bereits bekannt. Die Dosierpipette dient zum Dosieren von Flüssigkeiten oder Präparaten aus einem Gefäß, insbesondere aus einer Flasche. Mit einer Dosierpipette können vorgegebenen Flüssigkeitsvolumina aus dem Gefäß aufgenommen, entfernt und an anderer Stelle wieder abgegeben werden. Durch eine Bewegung des Kolbens kann das Volumen in dem Dosierkörper vergrößert werden, wodurch Flüssigkeit in den Dosierkörper eingesaugt werden kann. Anschließend kann die Dosierpipette aus dem mit Flüssigkeit gefüllten Gefäß entnommen werden. Durch einen Druckhub des Kolbens wird die Flüssigkeit dann an anderer Stelle abgegeben. Üblicherweise befindet sich auf dem Kolben oder einem mit dem Kolben verbundenen Teil eine Skalierung, mit der das eingesaugte Flüssigkeitsvolumen gemessen werden kann.

Aus der DE 32 16 644 A1 ist ein Wiederholspender für Flüssigkeiten bekannt, bei dem die Flüssigkeitsmenge durch ein wiederholtes Niederdrücken eines Betätigungsteils eingestellt werden kann.

Die DE 28 25 015 A1, die DE 23 43 687 B1 und die US 4 074 831 A offenbaren weitere Dosiervorrichtungen, allerdings jeweils ohne einen gesonderten Dosieraufsatz.

Eine Dosiervorrichtung nach dem Oberbegriff des Anspruchs 1 ist aus der US 2 705 494 A bekannt.

Aus der DE 694 06 647 T2 ist eine Spritze zum auf eine bestimmte Anzahl von Injektionen begrenzten Gebrauch bekannt, die einen Dosierkörper aufweist, in dem ein Kolben verschieblich geführt ist. In dem Dosierkörper befindet sich ein Einsatzteil, das die Form eines Halbzylinders hat, in dem Rasterleisten mit als Widerhaken wirkenden Zungen vorgesehen sind, die gewährleisten, dass die Spritze nur eine bestimmte Anzahl von Injektionen durchführen kann.

Bei den vorbekannten Dosierpipetten kann es zu Fehldosierungen kommen. Diese Gefahr besteht insbesondere bei Personen, die aufgrund körperlicher und/oder geistiger Störungen unfähig sind, flüssige Medikamente exakt zu dosieren.

Aufgabe der Erfindung ist es, eine verbesserte Dosiervorrichtung der eingangs angegebenen Art vorzuschlagen, mit der eine Fehldosierung verhindert werden kann.

Erfindungsgemäß wird diese Aufgabe durch die Merkmale des Anspruchs 1 gelöst. Die Dosiervorrichtung umfasst einen Dosieraufsatz, der mit der Dosierpipette lösbar verbunden oder lösbar verbindbar ist. Der Dosieraufsatz umfasst einen Anschlagkörper mit einem Anschlag für den Kolben. Durch den Anschlag an dem Anschlagkörper ist der Saughub des Kolbens begrenzt. Der Saughub des Kolbens kann auf einen vorherbestimmten Wert begrenzt werden.

Der Dosieraufsatz umfasst einen halbzylindrischen Körper und ein Verbindungsteil zur Verbindung des Dosieraufsatzes mit dem Dosierkörper. Das Verbindungsteil ist an dem dem Dosierkörper zugewandten Ende des halbzylindrischen Körpers vorgesehen.

Vorteilhafte Weiterbildungen der Erfindung sind Gegenstand der Unteransprüche.

Vorteilhaft ist es, wenn der Anschlagkörper verstellbar ist. Hierbei ist es von Vorteil, wenn der Anschlagkörper verschiebbar und feststellbar ist. Durch eine Verschiebung des Anschlagkörpers kann ein bestimmter Kolbenhub eingestellt werden. Dieser Kolbenhub entspricht einem bestimmten Dosiervolumen. Vorzugsweise wird der Anschlagkörper an der Stelle, an der er sich, gegebenenfalls nach einer Verschiebung, befindet, festgestellt. Die Feststellung kann formschlüssig und/oder reibschlüssig erfolgen.

Eine weitere vorteilhafte Weiterbildung ist dadurch gekennzeichnet, dass an dem Dosieraufsatz eine Verzahnung für den Anschlagkörper vorgesehen ist.

Nach einer weiteren vorteilhaften Weiterbildung ist der Anschlagkörper an dem Dosieraufsatz reibschlüssig verstellbar.

Eine weitere vorteilhafte Weiterbildung ist dadurch gekennzeichnet, dass der Anschlag des Anschlagkörpers einen Schlitz in dem Dosieraufsatz durchgreift.

Die Erfindung betrifft ferner einen Dosieraufsatz für eine Dosierpipette, wobei der Dosieraufsatz mit der Dosierpipette lösbar verbunden oder lösbar verbindbar ist und wobei der Dosieraufsatz einen Anschlagkörper mit einem Anschlag für den Kolben der Dosierpipette umfasst. Der Dosieraufsatz kann eines oder mehrere oder alle der weiteren beschriebenen vorteilhaften Merkmale aufweisen.

Ausführungsbeispiele der Erfindung werden nachstehend anhand der beigefügten Zeichnung im Einzelnen erläutert. In der Zeichnung zeigt
- Fig. 1: eine Dosiervorrichtung mit einer Dosierpipette und einem Dosieraufsatz, an dem eine Verzahnung für den Dosierkörper vorgesehen ist, in einer perspektivischen Ansicht,
- Fig. 2: die Dosiervorrichtung gemäß Fig. 1 in einer seitlichen Schnittansicht,
- Fig. 3: eine weitere Ausführungsform einer Dosiervorrichtung mit einer Dosierpipette und einem Dosieraufsatz, dessen Anschlagkörper an dem Dosieraufsatz reibschlüssig verstellbar ist, in einer perspektivischen Ansicht und
- Fig. 4: die Dosiervorrichtung gemäß Fig. 3 in einer seitlichen Schnittansicht.

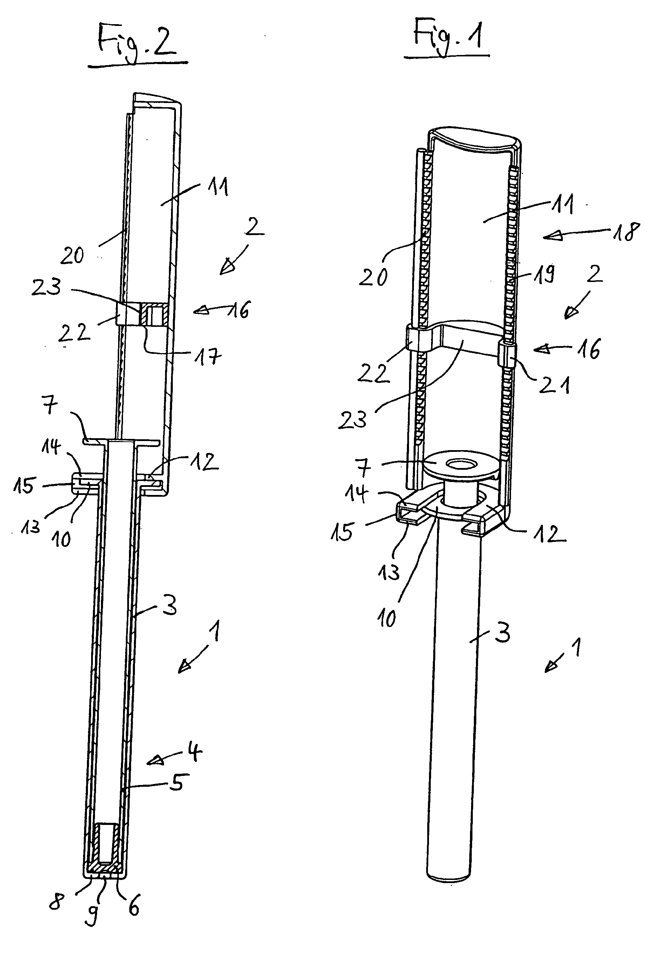

Die in Fig. 1 und 2 gezeigte Dosiervorrichtung umfasst eine Dosierpipette 1 und einen Dosieraufsatz 2, der mit der Dosierpipette 1 lösbar verbunden ist.

Die Dosierpipette 1 umfasst einen Dosierkörper 3 und einen Kolben 4, der in dem Dosierkörper 3 längsverschieblich geführt ist. Der Kolben 3 besteht aus einem Stößel 5 und einer Manschette 6. Der Stößel 5 umfasst ein Rohr, in dessen unteres Ende die Manschette 6 eingesteckt ist. Die Manschette 6 ist aus einem gegenüber dem Dosierkörper 3 abdichtenden Material hergestellt. An ihrem oberen, der Manschette 6 abgewandten Ende weist der Stößel 5 einen Anschlag 7 auf. Der Anschlag 7 ist scheibenförmig. Er ist als ein nach außen weisender Flansch ausgestaltet.

Der Dosierkörper 3 weist an seinem unteren Ende eine Bodenfläche 8 auf, in deren Mitte eine Öffnung 9 vorgesehen ist, durch die Flüssigkeit einströmen und wieder ausströmen kann. Der Dosierkörper 3 weist ferner an seinem oberen Ende einen Anschlag 10 auf. Der Anschlag 10 ist scheibenförmig. Er ist als nach außen weisender Flansch ausgestaltet.

Der Dosieraufsatz 2 umfasst einen halbzylindrischen Körper 11 und ein Verbindungsteil 12, das an dem dem Dosierkörper 3 zugewandten Ende des halbzylindrischen Körpers 11 vorgesehen ist. Der Körper 11 kann in einer nicht erfindungsgemäßen Ausführung auch in anderer Form ausgebildet sein, beispielsweise eckig, dreieckig, viereckig, sechseckig oder in einer sonstigen Form. Das Verbindungsteil 12 ist U-förmig ausgestaltet, wobei das U quer zur Längsachse des Dosierkörpers 3 und des Kolbens 4 der Dosierpipette 1 verläuft. Ferner weist das Verbindungsteil 12 ein U-förmiges Profil auf, dessen Schenkel 13, 14, die durch die Basis 15 miteinander verbunden sind, den scheibenförmigen Anschlag 10 des Dosierkörpers 3 umfassen. Der scheibenförmige Anschlag 10 kann seitlich in das doppelt U-förmige Verbindungsteil 12 des Dosierkörpers 3 eingeschoben werden, wie in Fig. 1 und 2 gezeigt. Auf diese Weise ist der Dosieraufsatz 2 mit der Dosierpipette 1 lösbar verbunden.

Der Dosieraufsatz 2 umfasst einen Anschlagkörper 16, dessen Unterseite einen Anschlag 17 für den Kolben 4 bildet. Der Anschlagkörper 16 ist mit dem Dosieraufsatz 2 lösbar verbunden. Er ist an dem Dosieraufsatz 2 verstellbar.

An dem Dosieraufsatz 2 ist eine Verzahnung 18 für den Anschlagkörper 16 vorgesehen. Die Verzahnung 18 besteht aus zwei Zahnreihen 19, 20, die an den Endkanten des halbzylindrischen Körpers 11 vorgesehen sind. Es ist allerdings auch möglich, nur eine der beiden Zahnreihen 19, 20 vorzusehen und die andere Endkante des halbzylindrischen Körpers 11 nicht mit einer Zahnreihe zu versehen. Die Zahnreihen 19, 20 verlaufen parallel zueinander und im Abstand voneinander und parallel zur Längsrichtung des Dosieraufsatzes 2 und der Dosierpipette 1. An dem Anschlagkörper 16 sind Ansätze 21, 22 angeformt, die die Zahnreihen 19, 20 umgreifen und in deren Inneren jeweils einer oder mehrere Zähne vorhanden sind, die mit entsprechenden Zähnen der Zahnreihen 19, 20 verrasten. Im Übrigen verläuft der Außenumfang des Anschlagkörpers 16 im Wesentlichen parallel zur Innenkontur des halbzylindrischen Körpers 11. Der Anschlagkörper 16 weist ferner eine Sehnenfläche 23 auf, die in das Innere des halbzylindrischen Körpers 11 hineinragt und deren Unterseite den Anschlag 17 für den Kolben 4 bildet.

Beim Betrieb kann der Anschlagkörper 16 in eine bestimmte Höhe verstellt werden, durch die ein bestimmter Hub des Kolbens 4 und damit ein bestimmtes Volumen der Dosierpipette 1 festgelegt werden. Beim Saughub wird der Kolben 4 nach oben bewegt, bis der Anschlag 7 des Stößels 5 an dem Anschlag 17 des Anschlagkörpers 16 anschlägt. Durch diese Begrenzung des Saughubs wird das Saugvolumen festgelegt. Das eingesaugte Volumen kann dann an anderer Stelle wieder abgegeben werden.

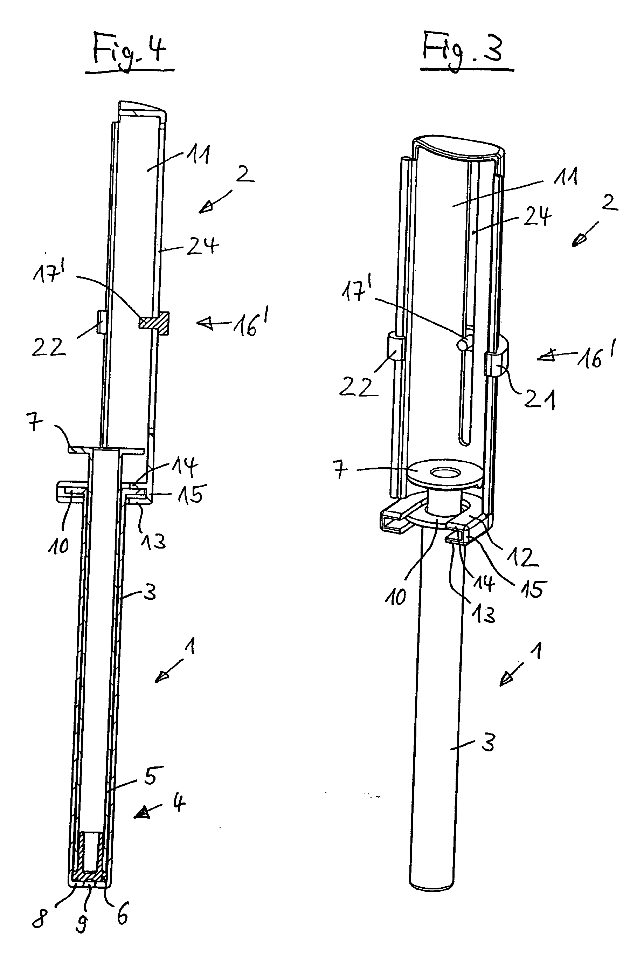

Bei der abgewandelten Ausführungsform gemäß Fig. 3 und 4 sind entsprechende Teile mit denselben Bezugszeichen versehen, so dass sie nicht erneut beschrieben werden müssen. Hier ist keine Verzahnung vorhanden. Der Dosieraufsatz 2 weist einen Schlitz 24 auf. Der Schlitz 24 ist im halbzylindrischen Körper 11 vorgesehen. Er verläuft parallel zur Längsrichtung des Dosieraufsatzes 2 und der Dosierpipette 1. Er liegt in der Mitte des halbzylindrischen Körpers 11. Der Anschlagkörper 16' befindet sich außerhalb des halbzylindrischen Körpers 11. Die Ansätze 21, 22 des Anschlagkörpers 16 sind an den entsprechenden Kanten des halbzylindrischen Körpers 11 reibschlüssig gehalten.

Der Anschlagkörper 16 weist einen Stift auf, der nach innen ragt und der den Schlitz 24 durchgreift. Der Stift bildet den Anschlag 17' für den Kolben 4.

Beim Betrieb wird der Anschlagkörper 16' in die gewünschte Stellung verschoben. Beim Saughub schlägt der Anschlag 7 des Stößels 5 bei der Aufwärtsbewegung des Kolbens 4 an den Anschlag 17' des Anschlagkörpers 16 an.

Es ist möglich, den Kolben 4 einteilig auszugestalten. In diesem Fall kann an dem unteren Ende des Stößels 5 eine dichtende Manschette einstückig ausgeformt sein.

Durch die Erfindung wird insbesondere eine sichere und exakte Dosierung von flüssigen Medikamenten mittels einer Dosierpipette ermöglicht. Dies ist insbesondere für sehbehinderte Menschen und für Menschen mit körperlichen und/oder geistigen Behinderungen wie beispielsweise Demenz, Alzheimer oder Parkinson von Bedeutung. Der Dosieraufsatz kann auf den Dosierkörper der Dosierpipette aufgesteckt werden. Durch den einen Anschlag bildenden Anschlagkörper kann die zu verabreichende Medikamentenmenge voreingestellt werden, beispielsweise von einem Arzt oder einer Betreuungsperson. Durch den Anschlagkörper lässt sich der Stößel des Kolbens nur noch bis zur Höhe des Anschlagkörpers aus dem Dosierkörper herausziehen. Somit ist auch die mit der Pipette zu dosierende Menge begrenzt. Es kann keine Überdosierung oder Falschdosierung vorkommen. Eine Skalierung kann an dem Dosieraufsatz vorgesehen sein, insbesondere in dem Innenbereich des Dosieraufsatzes. Die Dosierung kann allerdings auch durch das Herausziehen des Stößels der Pipette festgelegt werden, da auf dem Stößel des Kolbens üblicherweise eine Skalierung aufgebracht ist.

## Patentansprüche

1. Dosiervorrichtung mit
einer Dosierpipette (1), die einen Dosierkörper (3) und einen Kolben (4), der in dem Dosierkörper (3) längsverschieblich geführt ist, umfasst,
und einem Dosieraufsatz (2), der mit der Dosierpipette (1) lösbar verbunden oder lösbar verbindbar ist und der einen Anschlagkörper (16, 16') mit einem Anschlag (17, 17') für den Kolben (4) sowie ein Verbindungsteil (12) zur Verbindung des Dosieraufsatzes (2) mit dem Dosierkörper (3) umfasst,
**dadurch gekennzeichnet,**
**dass** der Dosieraufsatz (2) einen halbzylindrischen Körper (11) umfasst, und das Verbindungsteil (12) an dem dem Dosierkörper (3) zugewandten Ende des halbzylindrischen Körpers (11) vorgesehen ist.

2. Dosiervorrichtung nach Anspruch 1, **dadurch gekennzeichnet, dass** durch den Anschlag (17, 17') der Saughub des Kolbens (4) begrenzt ist.

3. Dosiervorrichtung nach einem der vorhergehenden Ansprüche, **dadurch gekennzeichnet, dass** der Anschlagkörper (16, 16') verstellbar ist.

4. Dosiervorrichtung nach einem der vorhergehenden Ansprüche, **dadurch gekennzeichnet, dass** an dem Dosieraufsatz (2) eine Verzahnung (18) für den Anschlagkörper (16) vorgesehen ist.

5. Dosiervorrichtung nach einem der Ansprüche 1 bis 3, **dadurch gekennzeichnet, dass** der Anschlagkörper (16') an dem Dosieraufsatz (2) reibschlüssig verstellbar ist.

6. Dosiervorrichtung nach einem der vorhergehenden Ansprüche, **dadurch gekennzeichnet, dass** der Anschlag (17') des Anschlagkörpers (16') einen Schlitz (24) in dem Dosieraufsatz (2) durchgreift.

7. Dosieraufsatz für eine Dosierpipette, **gekennzeichnet durch** die Merkmale eines der Ansprüche 1 bis 6.

## Claims

1. A metering apparatus having
a metering pipette (1) which includes a metering body (3) and a piston (4) which is longitudinally displaceably guided in the metering body (3);
and a metering attachment (2) which is releasably connected or connectable to the metering pipette (1) and which includes a stop body (16, 16') having a stop (17, 17') for the piston (4) and a connection part (12) for connecting the metering attachment (2) to the metering body (3),
**characterized in that**
the metering attachment (2) includes a semi-cylindrical body (11); and the connection part (12) is provided at the end of the semi-cylindrical body (11) facing the metering body (3).

2. A metering apparatus in accordance with claim 1, **characterized in that** the suction stroke of the piston (4) is bounded by the stop (17, 17').

3. A metering apparatus in accordance with one of the preceding claims, **characterized in that** the stop body (16, 16') is adjustable.

4. A metering apparatus in accordance with one of the preceding claims, **characterized in that** a toothed arrangement (18) for the stop body (16) is provided at the metering attachment (2).

5. A metering apparatus in accordance with one of the claims 1 to 3, **characterized in that** the stop body (16') is adjustable in a friction-locking manner at the metering attachment (2).

6. A metering apparatus in accordance with one of the preceding claims, **characterized in that** the stop (17') of the stop body (16') engages through a slot (24) in the metering attachment (2).

7. A metering attachment for a metering pipette, **characterized by** the features of one of the claims 1 to 6.

## Revendications

1. Dispositif de dosage doté
d'une pipette de dosage (1), qui comprend un corps de dosage (3) et un piston (4) qui est guidé de manière déplaçable dans le sens de la longueur dans le corps de dosage (3),
et d'un élément supérieur de dosage (2), qui est ou peut être relié de manière amovible à la pipette de dosage (1) et qui comprend un corps de butée (16, 16') doté d'une butée (17, 17') pour le piston (4) ainsi qu'une pièce de liaison (12) destinée à relier l'élément supérieur de dosage (2) au corps de dosage (3),
**caractérisé en ce que**
l'élément supérieur de dosage (2) comprend un corps semi-cylindrique (11), et la pièce de liaison (12) est prévue sur l'extrémité du corps semi-cylindrique (11) tournée vers le corps de dosage (3).

2. Dispositif de dosage selon la revendication 1, **caractérisé en ce que** la course d'aspiration du piston (4) est limitée par la butée (17, 17').

3. Dispositif de dosage selon l'une des revendications précédentes, **caractérisé en ce que** le corps de butée (16, 16') est réglable.

4. Dispositif de dosage selon l'une des revendications précédentes, **caractérisé en ce qu'**une denture (18) pour le corps de butée (16) est prévue sur l'élément supérieur de dosage (2).

5. Dispositif de dosage selon l'une des revendications 1 à 3, **caractérisé en ce que** le corps de butée (16') est réglable par friction sur l'élément supérieur de dosage (2).

6. Dispositif de dosage selon l'une des revendications précédentes, **caractérisé en ce que** la butée (17') du corps de butée (16') traverse une fente (24) dans l'élément supérieur de dosage (2).

7. Élément supérieur de dosage pour pipette de dosage, **caractérisé par** les caractéristiques de l'une des revendications 1 à 6.
